# EUROPÄISCHE PATENTANMELDUNG

(11) **EP 4 015 612 A1**
(43) Veröffentlichungstag der Anmeldung: **22.06.2022**
(21) Anmeldenummer: 21207484.3
(22) Anmeldetag: 10.11.2021
(51) Int. Cl.: C12C 7/165, B01D 25/00

(54) **MAISCHEFILTERHEIZUNG**

(30) Priorität: 21.12.2020 DE 102020134358
(71) Anmelder: KRONES Aktiengesellschaft, 93073 Neutraubling (DE)
(72) Erfinder: SCHNEID, Ralph, 93073 Neutraubling (DE); TIPPMANN, Johannes, 93073 Neutraubling (DE)
(74) Vertreter: Grünecker Patent- und Rechtsanwälte PartG mbB

(57) **Zusammenfassung**

Die vorliegende Erfindung stellt eine Vorrichtung zur Filtration von Maische bereit, die einen Maischefilter und eine Einrichtung zum Zuführen von einem erwärmten Gas, die über eine erste Leitung mit dem Maischefilter zum Einleiten des erwärmten Gases in den Maischefilter und somit Aufheizen des Maischefilters verbunden ist, umfasst.

## Beschreibung

### Gebiet der Erfindung

Die vorliegende Erfindung betrifft das Heizen, insbesondere Vorheizen, eines Maischefilters, insbesondere eines Plattenfilters zur Filtration von Maische, vor dem Befüllen mit zu filtrierender Maische.

### Stand der Technik

Im Sudhaus wird aus stärkehaltigen Braurohstoffen, z. B. Gerste, Malz, Reis oder Mais, eine Bierwürze hergestellt, die unter Zugabe von Hefe vergoren wird. Die Braurohstoffe werden in einer Mühle zerkleinert und mit Wasser vermischt und somit eine Maische hergestellt. Zweck des Maischeprozesses ist unter anderem der Stärkeabbau. In der Fest-/Flüssig-Trennung, welche typischerweise in einem Läuterbottich oder Maischefilter stattfindet, werden die löslichen (flüssigen) Bestandteile von den unlöslichen Bestandteilen der Maische abgetrennt. Während die verbleibenden unlöslichen Bestandteile, die Treber, aus der Maische abgetrennt und anderen Verwendungszwecken z. B. als Tierfutter oder zur Energiegewinnung zugeführt werden, wird die abgetrennte flüssige Phase, die Würze, in einer Würzepfanne unter Zugabe von Hopfen gekocht.

Maischefilter sind bevorzugterweise Plattenfilterfilter, ausgeführt als Filterpressen, welche entweder als Kammerfilterpresse oder als Membranfilterpresse ausgeprägt sein können, wobei sich die Membranfilterpresse aufgrund Ihrer Flexibilität bezüglich der zu filternden Rohstoffmenge und Rohstoffart sowie geringerer Restfeuchte der Filterkuchen im Vergleich zu der Kammerfilterpresse als vorteilhaft erwiesen hat. Derartige Filterpressen sind aus mehreren rahmenförmigen Platten (z.B. Membranplatten, Filterplatten oder Kammerplatten) zu sogenannte Plattenpakete zusammengesetzt, die mit beweglichen undurchlässigen Kunststoffmatten, sogenannten Membranen, oder/und Filtertüchern ausgestattet sind. Die rahmenförmigen Platten begrenzen einen Trubraum (Unfiltratraum) zwischen den unterschiedlich gestalteten Platten im Plattenpaket zur Aufnahme der zu filtrierenden Maische, und sie bilden zur Filtratseite hin einen Filtratraum aus.

Zu Beginn einer Sudwoche beziehungsweise nach einer längeren Stillstandzeit zum Beispiel von mehr als 30 bis 60 Stunden bzw. wenn die Temperatur im Maischefilter zum Beispiel unter 50°C bis 60°C liegt, muss der Maischefilter vor der Beschickung mit zu filtrierender Maische vorgeheizt werden, da ansonsten die heiß eingefüllte Maische aufgrund der Spannungsbeanspruchung eine Schädigung des Materials des Maischefilters verursachen würde.

Im Stand der Technik wird daher ein Maischefilter durch mehrmaliges Befüllen und Entleeren mit Warmwasser vorgeheizt. Eine typische Prozessfolge eines Vorheizvorgangs für einen Maischefilter mittlerer Leistung mit einem Kammervolumen von etwa 300 hl umfasst:
- Befüllen mit 300 hl Wasser mit einer Temperatur von 50 °C
- Einwirkdauer 60 Minuten
- Entleeren auf Gully
- Befüllen mit 300 hl Wasser mit einer Temperatur von 60 °C
- Einwirkdauer 60 Minuten
- Entleeren auf Gully
- Befüllen mit 300 hl Wasser mit einer Temperatur von 70 °C
- Einwirkdauer 60 Minuten
- Entleeren auf Gully

Bei längeren Produktionspausen und starker Abkühlung des Filters muss die Einwirkdauer je Schritt auf etwa 120 Minuten erhöht werden. Das Wasser für die jeweiligen Schritte ist nach dem Heizen zu kalt für eine Energierückgewinnung. Für eine Wiederverwendung als Einmaisch- oder Anschwänzwasser müsste auch ein separates Sammelgefäß mit einer Aufheizvorrichtung vorgesehen werden, da eine Rückführung in den zentralen Warmwassertank zur Abkühlung desselbigen führen würde. In Summe gehen somit 900 hl Wasser verloren, und der Energiebedarf für das Erhitzen und Zuführen des Wassers ist relativ hoch.

Der Erfindung liegt daher die Aufgabe zugrunde, eine effektive Heizung beziehungsweise Vorheizung für einen Maischefilter bereitzustellen, bei der die im Stand der Technik unvermeidliche Verschwendung von Wasser vermieden werden kann.

### Beschreibung der Erfindung

Die oben genannte Aufgabe wird durch eine Vorrichtung zur Filtration von Maische (insbesondere Biermaische) gelöst, die einen Maischefilter (beispielsweise eine Membranfilterpresse) und eine Einrichtung zum Zuführen von einem erwärmten Gas, die über eine erste Leitung mit dem Maischefilter zum Einleiten des erwärmten Gases in den Maischefilter und somit zum Heizen/Aufheizen des Maischefilters verbunden ist, umfasst. Hier und im Weiteren kann das Gas zumindest eines von Luft, Kohlendioxid und Stickstoff umfassen oder zumindest aus einem dieser Gase bestehen. Die Wahl von Luft kann dahingehend vorteilhaft sein, dass sie kostengünstig und klimaneutral verwendet werden kann. Die Einrichtung zum Zuführen von einem erwärmten Gas kann hierbei dazu ausgebildet sein, Gas auf eine Temperatur von zumindest 50 °C, insbesondere zumindest 60°C oder zumindest 70 °C bis 100 °C, zu erhitzen, bevor es dem Maischefilter zugeführt wird. Die Einrichtung zum Zuführen von einem erwärmten Gas kann einen Ventilator oder ein Gebläse zum Bewegen des Gases (Ansaugen und Wegblasen) und ein Heizaggregat oder eine Wärmeübertragungseinrichtung, beispielsweise mit einem Wärmetauscher, umfassen. Der Ventilator oder das Gebläse kann kontinuierlich oder in zeitlichen Intervallen mit AN- und AUS-Phasen arbeiten. Während der AUS-Phasen kann sich das Gas gleichmäßig im Maischefilter zum gleichmäßigen Aufheizen desselben verteilen.

Das Heizen des Maischefilters mithilfe der von der Einrichtung zum Zuführen von einem erwärmten Gas gelieferten Gases erfolgt vor dem Einleiten von zu filtrierender Maische in den Maischefilter (also bei leerem Maischefilter). Das Heizen des Maischefilters kann ein Aufheizen zu Beginn einer Sudwoche sein oder umfassen. Anderseits kann das Heizen des Maischefilters ein Warmhalten des Maischefilters nach Beendigung einer Sudwoche sein oder umfassen oder das Heizen des Maischefilters kann ein Aufheizen nach einer längeren Produktionsunterbrechung sein oder umfassen. Anders als im Stand der Technik muss kein erwärmtes Wasser zum Heizen des Maischefilters, insbesondere vor einem Filtrationsprozess, beispielsweise zum Vorheizen des Maischefilters am Beginn einer Sudwoche, verwendet und schließlich verworfen werden, sondern es wird erwärmtes Gas zum Heizen des Maischefilters verwendet. Eine Verschwendung von Wasser wird somit vermieden. Das zum Heizen verwendete Gas kann zunächst beispielsweise aus Abwärme von Luftkompressoren oder Kältemaschinen stammen und so zum Heizen des Maischefilters wiederverwendet werden. Die Abwärme kann über Wärmetauscher gewonnen werden.

Es soll jedoch nicht ausgeschlossen werden, dass eine Aufheizung des Maischefilters zunächst mit erwärmtem Gas und nachfolgend mit erwärmtem Wasser erfolgt. In diesem Fall kann zumindest ein Teil des im Stand der Technik zum Heizen des Maischefilters benötigten Wassers eingespart werden.

Der Maischefilter der erfindungsgemäßen Vorrichtung kann eine Befüllleitung zum Befüllen mit zu filtrierender Maische umfassen, und die erste Leitung kann mit der Befüllleitung an einer oder mehreren Stellen der Befüllleitung, beispielsweise entlang des Maischefilters, verbunden sein, unabhängig davon, ob solche Verbindungen beispielsweise an der Kopfplatte oder der Endplatte bereitgestellt werden. So kann das erwärmte Gas in Filtrationsrichtung durch den Maischefilter geführt werden. Die erste Leitung kann in die Befüllleitung übergehen. Über die Befüllleitung kann das erwärmte Gas in die Filterkammern des Maischefilters gelangen und Filtertücher und Membrane aufheizen.

Das erwärmte Gas kann alternativ entgegen der Filtrationsrichtung durch den Maischefilter geführt werden. In diesem Fall kann die erste Leitung der erfindungsgemäßen Vorrichtung mit einer Entleerleitung des Maischefilters zum Abziehen eines Filtrats (etwa einer Bierwürze) an einer oder mehreren Stellen der Entleerleitung, beispielsweise entlang des Maischefilters, verbunden sein. Die erste Leitung kann in die Entleerleitung übergehen. Über diese Entleerleitung kann das erwärmte Gas in die Filterkammern des Maischefilters gelangen und Filtertücher und Membrane aufheizen.

Das erwärmte Gas kann sowohl von einem ersten Endbereich (der sogenannten Kopfplatte) als auch von einem dem ersten Endbereich gegenüberliegenden zweiten Endbereich (der sogenannten Endplatte) in die Filterplatten eingeleitet werden. Dies hat den Vorteil, dass über die Aufheizzeit eine homogenere Wärmeverteilung erreicht wird, als wenn die Einleitung nur über einen Endbereich erfolgen würde. Der Wechsel der Strömungsrichtung des erwärmten Gases kann abhängig von der Zeit und/oder der Temperatur erfolgen. So kann beispielsweise nach einer bestimmten Zeit die Richtung gewechselt werden oder wenn eine bestimmte Temperatur erreicht wurde oder wenn eine bestimmte Temperatur in einer bestimmten Zeitspanne nicht erreicht wurde. Für eine solche Steuerung, oder auch allgemein für andere Zwecke, kann der Maischefilter über eine Einrichtung zur Temperaturmessung, die einen Temperaturfühler umfassen kann, verfügen. Ebenso kann das erwärmte Gas sowohl an dem ersten Endbereich als auch an dem zweiten Endbereich aus dem Filter ausgleitet werden, wodurch gegebenenfalls eine homogenere Aufheizung des Filters erreicht werden kann. Die oben genannte erste Leitung kann mit der oben genannten Befüllleitung an einer oder mehreren Stellen der Befüllleitung verbunden sein, unabhängig davon, ob solche Verbindungen beispielsweise an der Kopfplatte oder der Endplatte bereitgestellt werden.

Weiterhin kann das erwärmte Gas über eine externe Sammelleitung und/oder über Würzeabziehleitungen zugeführt und/oder abgeführt werden. Die Sammelleitung kann mit der Kopfplatte oder Endplatte verbunden sein oder nicht. Zumindest eine der Würzeabziehleitungen kann mit der Kopfplatte oder Endplatte verbunden sein oder nicht.

Die erfindungsgemäße Vorrichtung kann, etwa durch entsprechende Leitungen und gegebenenfalls einen Puffertank zum Zwischenspeichern des Gases, derart ausgebildet sein, dass das erwärmte Gas in einem Kreislauf von der Einrichtung zum Zuführen von einem erwärmten Gas durch den Maischefilter geführt wird und das durch den Maischefilter geführte Gas wieder zu der Einrichtung zum Zuführen von einem erwärmten Gas (gegebenenfalls nach Zwischenspeicherung in einem Puffertank) geführt wird.

Gemäß einer Weiterbildung umfasst die Vorrichtung zur Filtration von Maische eine Befeuchtungseinrichtung zum Befeuchten des in den Maischefilter eingeleiteten Gases. Feuchtes Gas wie etwa Luft hat eine höhere Wärmekapazität als trockenes Gas und kann somit einer effektiveren Heizung des Maischefilters dienen.

Gemäß einer Weiterbildung umfasst die Vorrichtung einen Anschwänzwassertank, der Anschwänzwasser für die Auswaschung des Filterkuchens nach Abziehen der Vorderwürze bereitstellt. Dieser Anschwänzwassertank kann über eine zweite Leitung mit dem Maischefilter und über eine dritte Leitung mit der Einrichtung zum Zuführen von einem erwärmten Gas verbunden sein.

Somit lässt sich der folgende Kreislauf des zum Heizen des Maischefilters verwendeten Gases realisieren: Die Einrichtung zum Zuführen von einem erwärmten Gas saugt Gas aus dem Anschwänzwassertank an, erwärmt diese und liefert sie in den Maischefilter zum Heizen desselben. Dieses Gas durchläuft den Maischefilter und wird nach Verlassen desselben wieder in den Anschwänzwassertank geleitet. Somit lässt sich, beispielsweise vollautomatisch gesteuert/geregelt, ein Heizkreislauf für den Maischefilter aufbauen. Hierbei kann insbesondere vorgesehen sein, dass das Gas im Verlauf des mehrmaligen Einleitens in den Maischefilter zum Heizen desselben schrittweise auf eine immer höhere Temperatur erwärmt wird.

In dem Anschwänzwassertank kann eine Befeuchtungseinrichtung angeordnet sein, die dazu ausgebildet ist, Gas zu befeuchten, die von der Einrichtung zum Zuführen von einem erwärmten Gas angesaugt wird.

Die oben genannte Aufgabe wird auch durch Bereitstellen eines Verfahrens zum Heizen/Aufheizen eines Maischefilters (insbesondere eines Maischefilter zur Filtration von Biermaische) mit Einleiten erwärmten Gases in den (bezüglich zu filtrierender Maische leeren) Maischefilter durch eine Einrichtung zum Zuführen von einem erwärmten Gas, die mit dem Maischefilter über eine erste Leitung verbunden ist, gelöst. Das Gas kann zumindest eines von Luft, Kohlendioxid und Stickstoff umfassen oder zumindest aus einem dieser Gase bestehen. Das Heizen erfolgt außerhalb eines Filtrationsvorgangs. Beispielsweise wird der Maischefilter zu Beginn einer Sudwoche vorgeheizt, und/oder der Maischefilter wird nach Beendigung einer Sudwoche warmgehalten und/oder der Maischefilter wird nach einer längeren Produktionsunterbrechung vorgeheizt. Das zum Heizen des Maischefilters verwendeten Gases kann hierbei auf eine Temperatur von zumindest 50 °C, insbesondere zumindest 60°C oder zumindest 70 °C bis 100 °C, vor dem Einleiten in den Maischefilter erhitzt werden.

Vor dem Einleiten in den Maischefilter kann das Gas befeuchtet werden. Ein Heizen des Maischefilters mithilfe befeuchteten Gases kann effektiver erfolgen, als es mit trockenem Gas der Fall wäre.

Insbesondere kann gemäß dem erfindungsgemäßen Verfahren das erwärmte Gas in einem Kreislauf von der Einrichtung zum Zuführen von einem erwärmten Gas in den Maischefilter eingeleitet, aus dem Maischefilter ausgeleitet und der Einrichtung zum Zuführen von einem erwärmten Gas (gegebenenfalls nach einer Zwischenspeicherung in einem Puffertank) wieder zugeführt werden.

Gemäß einer Weiterbildung umfasst das Verfahren das Ausleiten des in den Maischefilter eingeleiteten Gases über mehrere (beispielsweise zwei) Leitungen, von denen sich eine im oberen und eine im unteren Bereich der Platten befinden kann. Diese mehreren Leitungen können parallel oder abwechselnd geöffnet und geschlossen werden, sodass sich eine homogene Gasverteilung und somit auch homogene Wärmeverteilung im Filter ergibt.

Gemäß einer Weiterbildung umfasst das Verfahren weiterhin das Ausleiten des in den Maischefilter eingeleiteten Gases nach Heizen des Maischefilters aus dem Maischefilter über eine zweite Leitung in einen Anschwänzwassertank und das Ansaugen von Gas aus dem Anschwänzwassertank durch die Einrichtung zum Zuführen von einem erwärmten Gas über eine dritte Leitung. Das Gas kann in einem Heizkreislauf geführt werden, wobei sie im Verlauf des wiederholten Einleitens in den Maischefilter auf immer höhere Temperaturen erwärmt werden kann. So kann das Gas zu Beginn eines Heizzyklus auf eine erste Temperatur T₁ erwärmt werden, durch den Maischefilter und aus diesem heraus in den Anschwänzwassertank geleitet werden und danach von der Einrichtung zum Zuführen von einem erwärmten Gas aus dem Anschwänzwassertank abgesaugt werden und dann auf eine zweite Temperatur T₂, die höher als die erste Temperatur T₁ ist, erwärmt und wieder in den Maischefilter eingeleitet werden. Im nächsten Zyklus kann sie dann auf eine dritte Temperatur T₃, die höher als die zweite Temperatur T₂ ist, erwärmt und wieder in den Maischefilter eingeleitet werden, usw. Insbesondere kann das Gas in einem Kreislaufprozess kontinuierlich auf eine gewünschte Temperatur erwärmt werden.

Um eine optimale Strömung des Gases durch den Maischefilter zu erhalten ist es vorteilhaft, wenn im Maischefilter ein Druckgefälle von Zuleitung zur Ableitung anliegt. Das Druckgefälle kann beispielhaft durch ein Gebläse, einen Ventilator, eine Ansaugpumpe oder durch einen Gaskühler (welcher einen Unterdruck erzeugt) erzeugt werden. Hierfür oder auch zu anderen Zwecken kann der Maischefilter mit Einrichtungen zum Messen des Druckes ausgestattet sein. Weiterhin ist es vorteilhaft, dass Überdruckabsicherungen (zum Beispiel für in das System eingebundene Tanks) vorhanden sind. Dies ist insbesondere möglich bzw. vorteilhaft, wenn der Maischefilter bzw. das gesamte System zum Aufheizen des Maischefilters hermetisch abgeschlossen ist, wie es gemäß einer weiteren Weiterbildung der Fall ist. Wenn das gesamte System zum Aufheizen des Maischefilters hermetisch abgeschlossen ist, lassen sich Energieverluste minimieren und es kann eine Aufheizung des Maischefilters schneller erfolgen.

Weiterhin kann das Gas in dem Anschwänzwassertank mithilfe des darin vorgelegten Anschwänzwassers befeuchtet werden.

Sämtliche Ausführungsformen des erfindungsgemäßen Verfahrens können mit einer Aufheizung des Maischefilters mithilfe erwärmten Wassers kombiniert werden. So kann beispielsweise der Maischefilter mithilfe erwärmten Gases vorgeheizt werden und nachfolgend mit einem auf eine entsprechende Temperatur erhitzten Wasser auf eine gewünschte Endtemperatur gebracht werden.

Im Folgenden werden Ausführungsformen einer erfindungsgemäßen Vorrichtung und eines erfindungsgemäßen Verfahrens unter Bezugnahme auf die Zeichnung beschrieben. Die beschriebenen Ausführungsformen sind in jeder Hinsicht lediglich als illustrativ und nicht als einschränkend anzusehen und verschiedene Kombinationen der angeführten Merkmale sind in der Erfindung eingeschlossen.
Figur 1 veranschaulicht beispielhaft eine Ausführungsform einer Vorrichtung zur Filtration von Maische, die eine Einrichtung zum Zuführen von erwärmter Luft umfasst, gemäß der vorliegenden Erfindung.
Figur 2 veranschaulicht beispielhaft eine weitere Ausführungsform einer Vorrichtung zur Filtration von Maische, die eine Einrichtung zum Zuführen von erwärmter Luft umfasst, gemäß der vorliegenden Erfindung.
Figur 3 veranschaulicht Schritte einer Heizung eines Maischefilters gemäß einer Ausführungsform der vorliegenden Erfindung.
Figur 4 veranschaulicht Schritte einer Heizung eines Maischefilters gemäß einer weiteren Ausführungsform der vorliegenden Erfindung.

Die vorliegende Erfindung stellt eine Vorrichtung zur Filtration von Maische (insbesondere Biermaische), die eine Einrichtung zum Zuführen von erwärmter Luft umfasst, und ein Verfahren zum Heizen eines Maischefilters (insbesondere zu Filtration von Biermaische) mit erwärmter Luft bereit. Anders als im Stand der Technik wird kein (oder zumindest weniger) erwärmtes Wasser zum Heizen des Maischefilters vor einem Filtrationsprozess, beispielsweise zum Vorheizen des Maischefilters am Beginn einer Sudwoche, verwendet, sondern erwärmte Luft. Es versteht sich, dass hier und im Weiteren auch ein anders Gas statt Luft Verwendung finden kann, beispielsweise Kohlendioxid oder Stickstoff. Insbesondere kann ein Gas Verwendung finden, dass zumindest eines von Luft, Kohlendioxid und Stickstoff umfasst oder daraus besteht.

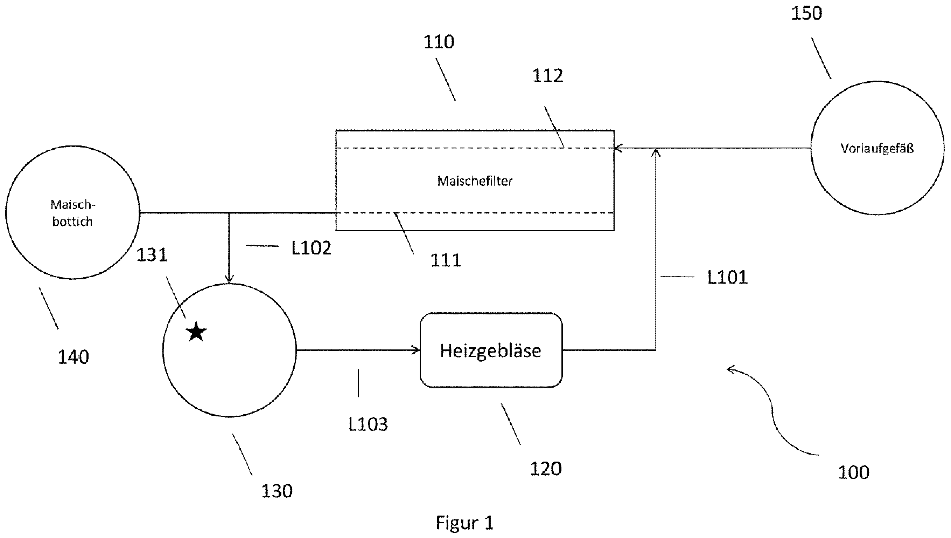

Figur 1 zeigt Elemente einer Vorrichtung 100 zur Filtration von (Bier)Maische gemäß einer Ausführungsform der vorliegenden Erfindung. Die in Figur 1 gezeigte Vorrichtung 100 umfasst einen Maischefilter 110. Der Maischefilter 110 kann in der in Figur 1 gezeigten Ausführungsform sowie in den weiter unten beschriebenen Ausführungsformen ein Plattenfilter, zum Beispiel eine Membranfilterpresse, sein. Der Maischefilter kann sich von einem ersten Endbereich, der sogenannten Kopfplatte, zu einem zweiten Endbereich, der sogenannten Endplatte, erstrecken, wobei der erste Endbereich einen Zulauf zum Einleiten der Maische (Unfiltrat) umfassen kann, und der zweite Endbereich einen Auslauf zum Ausleiten der Würze (Filtrat) umfassen kann. Der Zulauf zum Einleiten von Maische und der Auslauf zum Ausleiten der Würze können sich alternativ auch beide an der Kopfplatte befinden. Möglich ist ebenfalls, dass alle Medien über einen zentralen Zulaufkanal dem Maischefilter zugeführt werden und dann die Medien wie beispielsweise Unfiltrat mittels flexibler Schläuche in jede Platte eingeleitet werden. Insbesondere kann der Maischefilter 110 eine Anzahl an Unfiltraträumen und davon durch Filtermittel (Filtertücher) getrennten Filtraträumen, eine Anzahl an mit den Unfiltraträumen und den Filtraträumen innerhalb oder außerhalb der Platten verbundenen Kanälen, eine Ventilanordnung mit einer Anzahl an Ventilen, über die ein Durchfluss eines Mediums durch die Kanäle gesteuert/geregelt werden kann, und eine Steuerungs-Regelungseinrichtung, die mit der Ventilanordnung verbunden ist, um den Betrieb des Maischefilters 110 zu steuern/regeln, umfassen. Maische kann aus einer Befüllleitung 111 über Einlässe für Maische in Unfiltraträume des Maischefilters 110 eingeleitet werden. Nach erfolgter Filtration kann Würze über Filtratkanäle und einer Entleerleitung 112 des Maischefilters 110 abgezogen werden.

Gemäß einer Ausführungsform kann ein separater Abzug von Würze aus den einzelnen Platten über entsprechende Würzeabziehleitungen, die mit den Platten verbunden sind, erfolgen, die dann in einer externen Sammelleitung zu einem Puffertank geleitet werden kann.

Als Filtertücher können beispielsweise Tücher aus folgenden Materialien Verwendung finden: Polyetheretherketon (PEEK), Polytetrafluorethylen (PTFE), Polyphenylensulfid (PPS), Ethylen-Tetrafluorethylen (ETFE), Polyethylenterephthalat (PET), Polyvinylidenfluorid (PVDF), Polyvinylchlorid (PVC), Polypropylen (PP) und Polyamide (PA). Die Filtertücher können Maschenweiten von 100 µm bis 3000 µm aufweisen. Die Filtertücher können rahmenartig ausgebildet sein oder in Rahmen eingelegt sein, wobei aufeinanderfolgende Rahmen beispielsweise über eine Dichtung miteinander verbunden und nach außen abgeschlossen sind. Die Membranen können beispielsweise aus Polypropylen (PP), Polyvinylidenfluorid (PVDF) und deren Derivaten gefertigt sein und/oder aus einer Gummimischung.

Weiterhin umfasst die Vorrichtung 100 eine Einrichtung 120 zum Zuführen von erwärmter Luft. Diese Einrichtung kann einen Ventilator oder ein Gebläse und ein Heizaggregat oder eine Wärmeübertragungseinrichtung mit einem Wärmetauscher umfassen. Beispielsweise kann sie ein Heizgebläse umfassen, das dazu ausgelegt ist, Luft mit einer Heizleistung von 50 bis 200 kW zu erwärmen. Mithilfe der Einrichtung 120 zum Zuführen von erwärmter Luft wird der Maischefilter 110 geheizt. So können der Maischefilter 110 und somit insbesondere die Membranen und Filtertücher beispielsweise von 20 °C (Raumtemperatur) um 50° C auf eine Temperatur von 70 °C, also eine Temperatur im Bereich einer typischen Temperatur einer einzuleitenden Biermaische, geheizt werden. Um etwa einen Maischefilter mit um die 160 Platten in einem Plattenpaket beispielsweise jeweils aus Polypropylen mit einer spezifischen Wärmekapazität von 1,7 KJ/kg K und mit einem Gesamtgewicht von etwa 30 t um 50 °C aufzuheizen, ist etwa eine Wärmemenge von 650 kWh erforderlich, die angesichts der typischerweise (etwa zu Beginn einer Sudwoche) zur Verfügung stehenden Zeit durch konventionelle Heizgebläse leicht aufgebracht werden kann.

In der in Figur 1 gezeigten Ausführungsform ist die Einrichtung 120 zum Zuführen von erwärmter Luft über eine erste Leitung L101 mit dem Maischefilter 110 derart verbunden, dass die erwärmte Luft dem Maischefilter 110 an dessen Auslauf zugeführt wird und somit den Maischefilter 110 rückwärts (gegen die Filtrationsrichtung) zum Aufheizen desselben durchströmt. Die erste Leitung L101 kann mit einer Entleerleitung (Filtratabzugsleitung) 112 des Maischefilters 110 verbunden sein. Die Strömungsrichtung der Luft ist in Figur 1 durch Pfeile angezeigt. Die Luft kann dem Maischefilter 110 auch an mehreren Stellen entlang seiner Längsrichtung durch entsprechende Anbindung der ersten Leitung L101 an die Entleerleitung 112 zugeführt werden.

Weiterhin ist ein Anschwänzwassertank 130 vorgesehen, der über eine zweite Leitung L102 mit dem Zulauf des Maischefilters 110 verbunden ist. Im Filtrationsbetrieb kann über diese Leitung L102 Anschwänzwasser nach Abzug der Vorderwürze über die Befüllleitung 111 in den Maischefilter 110 eingeleitet werden. Die Leitung L102 kann auch eine zusätzliche Leitung darstellen, die nicht zum Anschwänzen verwendet wird. Im Heizbetrieb (bei nicht mit Maische gefüllten Maischefilter 110) kann die von der Einrichtung 120 zum Zuführen von erwärmter Luft über die erste Leitung L101 dem Maischefilter 110 rückwärts zugeführte Luft den Maischefilter 110 über die zweite Leitung L102 verlassen. Wenn ein separater Abzug von Würze aus den einzelnen Platten über entsprechende Würzeabziehleitungen erfolgt, kann die erwärmte Luft auch über die einzelnen Würzeabziehleitungen abgezogen werden. Bei einer entsprechenden Taktung des Luftflusses durch diese einzelnen Würzeabziehleitungen kann gegebenenfalls ein homogeneres Aufheizen erreicht werden, da sich in diesem Fall die Staudruckwirkung relativ genau kontrollieren lässt. Prinzipiell könnte die erwärmte Luft auch über die Würzeabziehleitungen dem Maischefilter 110 zugeführt werden.

In dem Anschwänzwassertank 130 kann die aus dem Maischefilter 110 ausgeleitete und durch die Wärmeübertragung auf den Maischefilter 110 abgekühlte Luft optional befeuchtet werden. Beispielsweise kann hierzu in dem Anschwänzwassertank 130 eine Befeuchtungseinrichtung 131, beispielsweise mit einem Spritzkopf, vorgesehen sein. So kann ein teilweise oder vollständig gesättigter Dampf bereitgestellt werden, der bei Wiederzuführung in den Maischefilter 110 eine bessere Wärmeübertragung als trockene Luft aufweist. Optional kann eine Befeuchtungseinrichtung für die Luft alternativ außerhalb des Anschwänzwassertanks 130 vorgesehen sein. Die in dem Anschwänzwassertank 130 nach Ausleiten aus dem Maischefilter 110 zwischengespeicherte Luft kann über eine dritte Leitung L103 von der Einrichtung 120 zum Zuführen von erwärmter Luft angesaugt und wieder in den Maischefilter 110 über die erste Leitung L101 eingeleitet werden. So lässt sich der in Figur 1 mithilfe der Pfeile gezeigte Kreislauf realisieren. Selbstverständlich lässt sich ein Kreislauf für die Luft auch ohne einen Anschwänzwassertank 130, beispielsweise mithilfe eines anderen Zwischenspeichers für die Luft oder durch ein direktes Zurückführen zu der Einrichtung 120 zum Zuführen von erwärmter Luft, realisieren.

Die in Figur 1 gezeigte Vorrichtung 100 kann Teil eines Sudhauses sein, und sie kann entsprechend ein Maischgefäß 140 zum Bereitstellen der in dem Maischefilter 110 zu filtrierenden Maische und/oder ein Vorlaufgefäß 150 zum Zwischenspeichern der von dem Maischefilter 110 abgezogenen Würze umfassen.

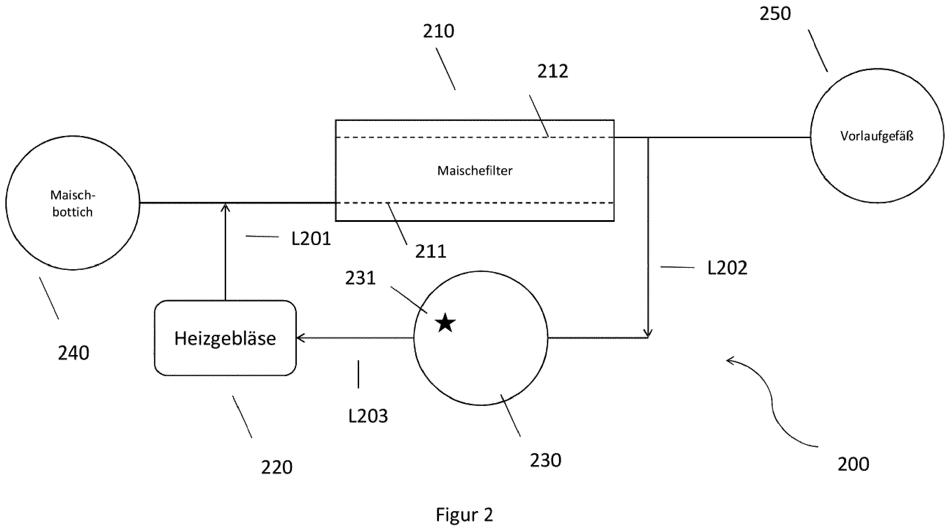

In Figur 2 ist eine alternative Ausführungsform gezeigt. Wie es durch die Pfeile angezeigt ist, verläuft der Heizkreislauf gegensätzlich zu demjenigen, der in Figur 1 gezeigt ist. Die in Figur 2 gezeigte Vorrichtung 200 zur Filtration von (Bier-)Maische umfasst einen Maischefilter 210, der wie der oben beschrieben Maischefilter 110, der in Figur 1 gezeigt ist, ausgebildet sein kann. Über eine erste Leitung L201 wird von einer Einrichtung 220 zum Zuführen von erwärmter Luft gelieferte erwärmte Luft in den Maischefilter 210 eingeleitet.

Die Einrichtung 220 zum Zuführen von erwärmter Luft kann der Einrichtung 120 zum Zuführen von erwärmter Luft entsprechen, die oben mit Bezug auf Figur 1 beschrieben wurde. Die erste Leitung L201 kann an einer oder mehreren Stellen mit einer Befüllleitung 211 des Maischefilters 210 zum Einleiten der der erwärmten Luft verbunden sein.

Die von der Einrichtung 220 zum Zuführen von erwärmter Luft gelieferte erwärmte Luft durchströmt den Maischefilter 210 unter Abgabe von Wärme und verlässt den Maischefilter 210 vorwärts (in Filtrationsrichtung) über eine zweite Leitung L202, die mit einem Anschwänzwassertank 230 verbunden ist. Die zweite Leitung L202 kann mit der Entleerleitung 212 des Maischefilters 210 verbunden sein. Wie der in Figur 1 gezeigte Anschwänzwassertank 130 kann auch der in Figur 2 gezeigte Anschwänzwassertank 230 optional eine Befeuchtungseinrichtung 231, beispielsweise einen Spritzkopf umfassend, aufweisen, um die Luft mit Feuchtigkeit zu beladen. Optional kann eine Befeuchtungseinrichtung für die Luft alternativ außerhalb des Anschwänzwassertanks 230 vorgesehen sein. Aus dem Anschwänzwassertank 230 kann die Einrichtung 220 zum Zuführen von erwärmter Luft über eine dritte Leitung L203 Luft ansaugen und dem Maischefilter 210 über die erste Leitung L201 zuführen.

Es lässt sich ein Kreislauf für die Luft auch ohne einen Anschwänzwassertank 230, beispielsweise mithilfe eines anderen Zwischenspeichers für die Luft oder durch ein direktes Zurückführen zu der Einrichtung 220 zum Zuführen von erwärmter Luft, realisieren.

Die in Figur 2 gezeigte Vorrichtung 200 kann Teil eines Sudhauses sein, und sie kann entsprechend ein Maischgefäß 240 zum Bereitstellen der in dem Maischefilter 210 zu filtrierenden Maische und/oder ein Vorlaufgefäß 250 zum Zwischenspeichern der von dem Maischefilter 210 abgezogenen Würze umfassen.

Auch wenn in der Figur 1 und Figur 2 die Befeuchtungseinrichtung 131, 231 im Anschwänzwassertank 130, 230 vorgesehen ist, so ist es auch möglich, dass die Befeuchtungseinrichtung 131, 231 zum Beispiel den teilweise oder vollständig gesättigten Dampf in die erste Leitung L101, L201 und/oder in die zweite Leitung L102, L202 und/oder in die dritte Leitung L103, L203 und/oder in die Befüllleitung L111, L211 und/oder in die Entleerleitung L112, L212 und/oder in eine andere Leitung, welche zum Maischefilter 110, 210 führt, dosiert.

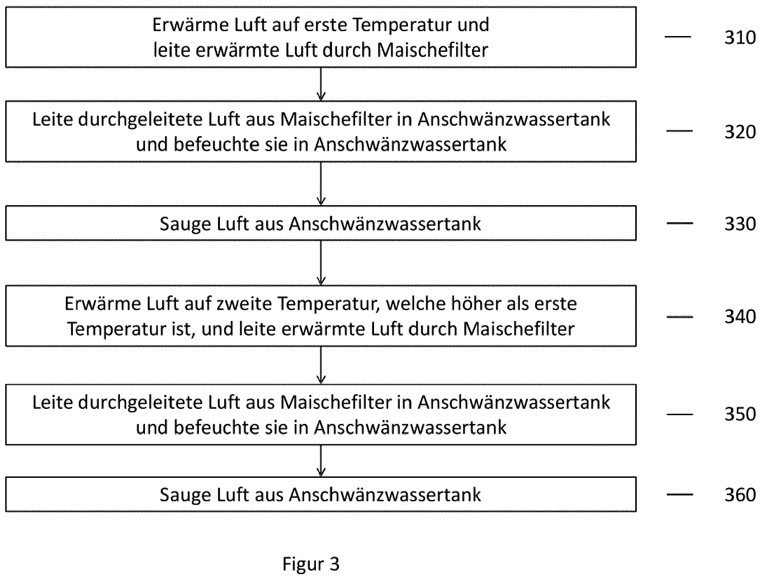

Figur 3 veranschaulicht eine Ausführungsform eines erfindungsgemäßen Verfahrens zum Heizen eines Maischefilters. Nach Beendigung einer Sudwoche wird ein Maischefilter gereinigt. Über das Wochenende oder längeren Produktionsunterbrechungen kühlt er auf Raumtemperatur ab. Bevor er zu Beginn einer neuen Sudwoche mit heißer Maische gefüllt werden kann, muss er auf eine Temperatur gebracht werden, die derjenigen der zu filtrierenden Maische vergleichbar ist, um Schädigungen des Maischefilters, beispielsweise der Filterplatten, Filtertücher und Membranen, zu vermeiden. Es muss also ein Vorheizen des Maischefilters vor dem Einbringen der Maische und der Filtration derselben erfolgen.

Hierzu wird Luft auf eine erste Temperatur erwärmt und durch den Maischefilter geleitet 310. Die erste Temperatur kann beispielsweise bei etwa 50 °C liegen. Nach der Wärmeübertragung auf den Maischefilter (beziehungsweise die Filterplatten, Filtertücher und Membranen desselben) wird die Luft in einen Anschwänzwassertank geleitet und optional dort befeuchtet 320. Die zuvor verwendete Luft, die auf die erste Temperatur erwärmt wurde, kann auch aus dem Anschwänzwassertank stammen und dort befeuchtet worden sein. Die verwendete Luft kann auch aus Abwärme von Luftkompressoren oder Kältemaschinen auf eine erste Temperatur erwärmt werden.

Nach Befeuchten in dem Anschwänzwassertank wird die Luft aus diesem abgesogen 330. Die abgesogene Luft wird auf eine zweite Temperatur erhitzt, die größer als die erste Temperatur ist, und bei dieser zweiten Temperatur wird die Luft wieder in den Maischefilter geleitet 340, sodass er weiter geheizt wird. Die zweite Temperatur kann beispielsweise etwa 60 °C betragen.

Nach Durchlauf durch den Maischefilter wird die Luft wieder in den Anschwänzwassertank geleitet und befeuchtet 350. Sie kann wiederum abgesaugt werden 360 und nach einer weiteren Erhitzung auf eine dritte Temperatur, die höher als die zweite Temperatur, etwa bei 70 °C, liegt dem Maischefilter wieder zum weiteren Aufheizen desselben zugeführt werden. Es versteht sich, dass die Schritte des Aufheizens der Luft, Einleitens der erwärmten Luft in den Maischefilter, Ausleitens der Luft in den Anschwänzwassertank und Befeuchtens derselben in diesem und Absaugens der befeuchteten Luft aus dem Anschwänzwassertank beliebig oft mit gewünschten Temperaturen der Luft wiederholt werden können. So kann ein kontinuierliches Aufheizen der Luft erfolgen.

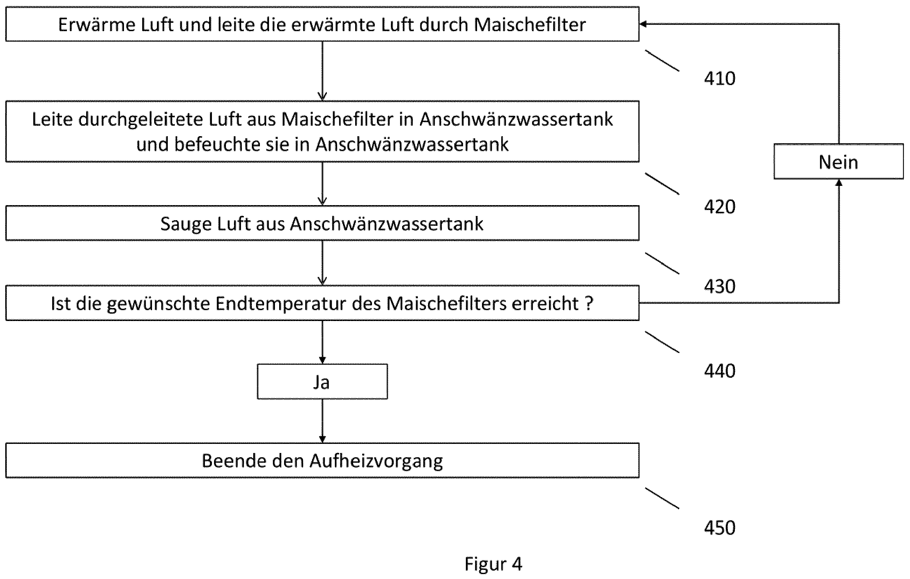

Figur 4 veranschaulicht eine weitere Ausführungsform eines erfindungsgemäßen Verfahrens zum Heizen eines Maischefilters. Luft kann in einem Kreislauf durch einen Maischefilter zum Aufheizen desselben geführt werden, wobei die Luft außerhalb des Maischefilters kontinuierlich erwärmt wird. In dem in Figur 4 gezeigten Schritt 410 wird Luft außerhalb des Maischefilters auf eine bestimmte Temperatur erwärmt und durch den Maischefilter geleitet. Die Luft wird aus dem Maischefilter ausgeleitet und in einen Anschwänzwassertank geleitet, wo sie optional befeuchtet wird 420. Alternativ wird sie in einen anderen Puffertank geleitet oder direkt einer Einrichtung zum Erwärmen der Luft zugeführt.

Aus dem Anschwänzwassertank wird die Luft dann wieder abgesaugt 430, weiter erwärmt und dem Maischefilter wieder zugeführt. Während des Aufheizprozesses des Maischefilters kann dessen Temperatur kontinuierlich gemessen werden, und so kann bestimmt werden, ob beziehungsweise wann die gewünschte Endtemperatur des Maischefilters erreicht wird 440. Solange die gewünschte Endtemperatur des Maischefilters noch nicht erreicht worden ist, wird sie in dem Kreislaufprozess weiter durch den Maischefilter geführt, außerhalb des Maischefilters weiter erwärmt und wieder dem Maischefilter zugeführt. Wenn die gewünschte Endtemperatur des Maischefilters erreicht worden ist, wird der Aufheizvorgang des Maischefilters beendet 450.

Die beschriebenen Aufheizprozesse können vollständig automatisiert gesteuert/geregelt ablaufen. Die oben mit Bezug auf die Figuren 3 und 4 beschriebenen Verfahren können von der in Figur 1 gezeigten Vorrichtung 100 oder der in Figur 2 gezeigten Vorrichtung 200 ausgeführt werden.

Weiterhin sei noch erwähnt, dass eine Einrichtung zum Zuführen erwärmten Wassers zu dem Maischefilter vorgesehen sein kann, sodass die oben beschriebenen Aufheizprozesse des Maischefilters mit einem Aufheizen des Maischefilters mithilfe erwärmten Wassers kombiniert werden können.

Da beim Heizen des Maischefilters 110, 210 sich die Filterplatten, welche zum Beispiel aus PP bestehen, während des Erwärmen dehnen, entstehen Spannungen. Diese Spannungen können zum Beispiel die Filterplatten beschädigen. Deshalb kann es erforderlich sein, dass während des Heizens des Maischefilters in gewissen Abständen der Maischefilter 110, 210 geöffnet und dann wieder geschlossen werden muss. Dies kann je nach Temperaturunterschied mehrmals erfolgen. In den Figuren 3 und 4 ist dieser Schritt nicht gezeigt. Ein zusätzlicher Vorteil beim Öffnen des Maischefilters während des Heizens besteht darin, dass, wenn optional die Luft befeuchtet wird, auftretendes Kondenswasser abgeführt werden kann.

In der in Figur 1 und Figur 2 gezeigten Ausführungsform wird die Luft zuerst befeuchtet und dann erwärmt. Da jedoch wärmere Luft mehr Wasser aufnehmen kann als kältere Luft kann es sinnvoll sein die Luft zuerst zu erwärmen und dann zu befeuchten. Weiterhin kann es sinnvoll sein, dass wenn Wasser zur Befeuchtung verwendet wird, dieses Wasser vorher auf eine erforderliche Temperatur erwärmt oder warmes Wasser mit einer erforderlichen Temperatur verwendet wird, sodass keine Abkühlung der Luft erfolgt.

An dem ersten Endbereich (Kopfplatte) und/oder dem zweiten Endbereich (Endplatte) können zusätzliche Leitungen für das Einleiten und/oder Ausleiten von Luft vorhanden sein. Dies kann beispielhaft der Fall sein, wenn in der Endplatte eine Umlenkung für die Maischebefüllung vorhanden ist, und diese Umlenkung über eine Zu- oder Ableitung für Luft verfügt. Auch dadurch kann eine homogenere Wärmeverteilung geschaffen werden.

## Patentansprüche

1. Vorrichtung (100, 200) zur Filtration von Maische, mit
einem Maischefilter (110, 210); und
einer Einrichtung (120, 220) zum Zuführen von einem erwärmten Gas, die über eine erste Leitung (L101, L201) mit dem Maischefilter (110, 210) zum Einleiten des erwärmten Gases in den Maischefilter (110, 210) und somit Aufheizen des Maischefilters (110, 210) verbunden ist.

2. Die Vorrichtung (100, 200) gemäß Anspruch 1, wobei der Maischefilter (110, 210) eine Befüllleitung (111, 211) zum Befüllen mit zu filtrierender Maische umfasst, und die erste Leitung (L101, L201) mit der Befüllleitung (111, 211) an einer oder mehreren Stellen der Befüllleitung (111, 211) verbunden ist.

3. Die Vorrichtung (100, 200) gemäß Anspruch 1, wobei der Maischefilter (110, 210) eine Entleerleitung (112, 212) zum Abziehen eines Filtrats umfasst, und die erste Leitung (L101, L201) mit der Entleerleitung (112, 212) an einer oder mehreren Stellen der Entleerleitung (112, 212) verbunden ist.

4. Die Vorrichtung (100, 200) gemäß einem der vorhergehenden Ansprüche, wobei die Einrichtung (120, 220) zum Zuführen von einem erwärmte Gas dazu ausgebildet ist, Gas auf eine Temperatur von zumindest 50 °C, insbesondere zumindest 60°C oder zumindest 70 °C bis 100 °C, zu erhitzen.

5. Die Vorrichtung (100, 200) gemäß einem der vorhergehenden Ansprüche, wobei die Einrichtung (120, 220) zum Zuführen von einem erwärmten Gas einen Ventilator oder ein Gebläse oder eine Wärmeübertragungseinrichtung, insbesondere mit einem Wärmetauscher, umfasst.

6. Die Vorrichtung (100, 200) gemäß einem der vorhergehenden Ansprüche, die dazu ausgebildet ist, das erwärmte Gas in einem Kreislauf von der Einrichtung (120, 220) zum Zuführen von einem erwärmten Gas durch den Maischefilter (110, 210) zu führen und die durch den Maischefilter (110, 210) geführte Luft wieder zu der Einrichtung (120, 220) zum Zuführen von einem erwärmten Gas zu führen.

7. Die Vorrichtung (100, 200) gemäß einem der vorhergehenden Ansprüche, weiterhin mit einer Befeuchtungseinrichtung (131, 231) zum Befeuchten des in den Maischefilter (110, 210) eingeleiteten Gases.

8. Die Vorrichtung (100, 200) gemäß einem der vorhergehenden Ansprüche, weiterhin mit
einem Anschwänzwassertank (130, 230), der Anschwänzwasser für die Auswaschung des Filterkuchens bereitstellt und über eine zweite Leitung (L102, L202) mit dem Maischefilter (110, 210) verbunden ist, und wobei die Einrichtung (120, 220) zum Zuführen von einem erwärmten Gas über eine dritte Leitung (L103, L203) mit dem Anschwänzwassertank (130, 230) verbunden ist.

9. Die Vorrichtung (100, 200) gemäß Anspruch 8, wobei in dem Anschwänzwassertank (130, 230) eine Befeuchtungseinrichtung (131, 231) angeordnet ist, die dazu ausgebildet ist, Gas zu befeuchten, das über die dritte Leitung (L103, L203) zu der Einrichtung (120, 220) zum Zuführen von einem erwärmten Gas geleitet wird.

10. Die Vorrichtung (100, 200) gemäß einem der vorhergehenden Ansprüche, wobei der Maischefilter (110, 210) ein Plattenfilter, insbesondere eine Membranfilterpresse, ist.

11. Die Vorrichtung (100, 200) gemäß einem der vorhergehenden Ansprüche, wobei das Gas zumindest eines von Luft, Kohlendioxid und Stickstoff ist oder umfasst.

12. Verfahren zum Aufheizen eines Maischefilters (110, 210) mit
Einleiten eines erwärmten Gases in den Maischefilter (110, 210) durch eine Einrichtung (120, 220) zum Zuführen von einem erwärmten Gas, die mit dem Maischefilter (110, 210) über eine erste Leitung (L101, L201) verbunden ist, wobei das erwärmte Gas insbesondere in einem Kreislauf von der Einrichtung (120, 220) zum Zuführen von einem erwärmten Gas in den Maischefilter (110, 210) eingeleitet, aus dem Maischefilter (110, 210) ausgeleitet und der Einrichtung (120, 220) zum Zuführen von einem erwärmten Gas wieder zu geführt wird.

13. Das Verfahren gemäß Anspruch 12, weiterhin mit Erwärmen des Gases auf eine Temperatur von zumindest 50 °C, insbesondere zumindest 60°C oder zumindest 70 °C bis 100 °C, vor dem Einleiten in den Maischefilter (110, 210).

14. Das Verfahren gemäß einem der Ansprüche 12 und 13, weiterhin mit
Ausleiten des in den Maischefilter (110, 210) eingeleiteten Gases aus dem Maischefilter (110, 210) über eine zweite Leitung (L102, L202) in einen Anschwänzwassertank (130, 230); und
Ansaugen von Gas aus dem Anschwänzwassertank (130, 230) durch die Einrichtung (120, 220) zum Zuführen von einem erwärmten Gas über eine dritte Leitung (L103, L203).

15. Das Verfahren gemäß einem der Ansprüche 12 bis 14, wobei das eingeleitete Gas über mehrere Leitungen ausgeleitet wird, die insbesondere parallel oder abwechselnd geöffnet werden, und/oder das eingeleitete Gas sowohl über einen ersten Endbereich des Maischefilters (110, 210) als auch einen zweiten, dem ersten Endbereich gegenüberliegenden, Endbereich des Maischefilters (110, 210) eingeleitet wird.

16. Das Verfahren gemäß einem der Ansprüche 11 bis 15, weiterhin mit Befeuchten des in den Maischefilter (110, 210) eingeleiteten Gases.
